# EUROPEAN PATENT SPECIFICATION

(11) **EP 2 424 209 B1**
(45) Date of publication and mention of the grant of the patent: **01.04.2020**
(21) Application number: 11177766.0
(22) Date of filing: 17.08.2011
(51) Int. Cl.: H04N 1/053

(54) **Pixel clock generating device and image forming apparatus**
Pixeltakterzeugungsvorrichtung und Bilderzeugungsvorrichtung
Dispositif de génération d'horloge pixel et appareil de formation d'images

(30) Priority: 25.08.2010 JP 2010188552
(43) Date of publication of application: 29.02.2012
(73) Proprietor: Ricoh Company, Ltd., Tokyo 143-8555 (JP)
(72) Inventor: Hayashi, Masayuki, Ohta-ku, Tokyo 143-8555 (JP); Miyadera, Tatsuya, Ohta-ku, Tokyo 143-8555 (JP); Shirasaki, Yoshinori, Ohta-ku, Tokyo 143-8555 (JP)
(74) Representative: White, Duncan Rohan

(56) References cited:
- US-A1- 2003 067 533
- US-A1- 2005 219 354

## Description

### 1. Field of the Invention

The present invention relates to a pixel clock generating device and an image forming apparatus.

### 2. Description of the Related Art

Conventionally, in an image forming apparatus, there has been known a technique for delaying timing of inserting a pixel clock with respect to a line adjacent in a sub operation direction so as to prevent image degradation from occurring when correcting dot positional deviation in a main scanning direction by intermittently inserting a pixel clock of a different cycle into a pulse train of a pixel clock (for example, Japanese Patent Application Laid-open No. 2007-203739).

It has been found that if a cycle of inserting a pixel clock having a changed cycle is constant in performing the correction, image degradation easily occurs.

US20030067533 A1 discloses a pixel clock generating apparatus comprising a data offset circuit and a pixel generator. The data offset circuit generates a phase-shifted pixel clock a predetermined number of times in each of the data block consisting in a predetermined number of successive clocks. This prevents a vertical streak from appearing when writing a number of successive lines, in particular when, in an embodiment, random phase shifting timing is used.

### SUMMARY OF THE INVENTION

It is an object of the present invention to at least partially solve the problems in the conventional technology.

According to an aspect of the present invention, there is provided a pixel clock generating device that includes: a pixel clock generating unit that generates a pixel clock train in which a correction clock having a time length different from that of a basic clock is intermittently inserted in a basic clock train corresponding to one line in a main scanning direction, wherein each pixel clock train is generated based on a plurality of blocks including a plurality of basic clocks and a plurality of correction clocks, , wherein the number of clocks in each block is the same, and wherein the pixel clock train includes the plurality of blocks that are different in a correction pattern as a pattern in which the correction clock is inserted, characterized by each odd-numbered block in the main scanning direction having a first correction pattern that is different from a second correction pattern of each even-numbered block in the main scanning direction.

According to another aspect of the present invention, there is provided an image forming apparatus that includes: the pixel clock generating unit included in the pixel clock generating device mentioned above; a light source control unit that controls a light source so that the light source emits an optical beam onto a photosensitive element according to the pixel clock train generated by the pixel clock generating unit; a phase deviation calculation unit that calculates a phase deviation in a main scanning direction based on a detection result of an image detection unit that detects a rendering pattern formed on the photosensitive element or of an optical beam detection unit that detects an optical beam emitted toward the photosensitive element; and a correction pattern generating unit that generates the correction pattern based on a calculation result by the phase deviation calculation unit.

### BRIEF DESCRIPTION OF THE DRAWINGS

FIG. 1 is a block diagram illustrating a hardware configuration of an image forming apparatus according to an embodiment;
FIG. 2 is a diagram illustrating an example of a functional configuration of an image forming apparatus;
FIG. 3 is a diagram illustrating an example of a configuration of a printer engine included in an image forming apparatus according to an embodiment;
FIG. 4 is a top view illustrating an example of a configuration of an optical writing device included in an image forming apparatus according to an embodiment;
FIG. 5 is a lateral cross-sectional view illustrating an example of a configuration of an optical writing device according to an embodiment;
FIG. 6 is a block diagram illustrating an example of a control circuit of an optical writing device according to an embodiment;
FIG. 7 is an explanatory diagram schematically illustrating an example of a pixel clock generated by a pixel clock generating device according to an embodiment;
FIG. 8 is an explanatory diagram schematically illustrating an example of a block group included in a plurality of pixel clock trains generated by a pixel clock generating device according to an embodiment;
FIG. 9 is an explanatory diagram schematically illustrating an example of a block included in a pixel clock generated by a pixel clock generating device according to an embodiment;
FIG. 10 is an explanatory diagram schematically illustrating another example of a block included in a pixel clock generated by a pixel clock generating device according to an embodiment; and
FIG. 11 is a diagram illustrating an example of a flowchart of an update process of a correction pattern in a pixel clock generating device according to an embodiment.

### DETAILED DESCRIPTION OF THE PREFERRED EMBODIMENTS

Hereinafter, exemplary embodiments will be described in detail with reference to the accompanying drawings. In the following description, an image forming apparatus as a multifunction peripheral (MFP) will be described. An image forming apparatus according to the present embodiment is an electrophotography image forming apparatus, and the gist thereof is correction of an image writing position in a sub scanning direction in an optical writing device that forms an electrostatic latent image on a photosensitive element.

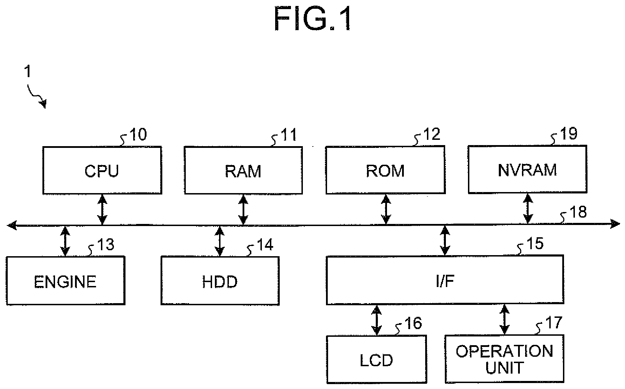

FIG. 1 is a block diagram illustrating a hardware configuration of an image forming apparatus according to the present embodiment. As illustrated in FIG. 1, an image forming apparatus 1 according to the present embodiment further includes an engine that executes image formation as compared with a configuration of an information processing terminal such as a general server or a personal computer (PC). That is, the image forming apparatus 1 according to the present embodiment includes a central processing unit (CPU) 10, a random access memory (RAM) 11, a read only memory (ROM) 12, an engine 13, a hard disk drive (HDD) 14, an interface (I/F) 15, a nonvolatile RAM (NVRAM) 19 as a nonvolatile storage unit, which are connected to one another via a bus 18. The I/F 15 is connected with a liquid crystal display (LCD) 16 and an operation unit 17.

The CPU 10 is a calculation unit and controls the overall operation of the image forming apparatus 1. The RAM 11 is a volatile storage medium into which and from which information can be written and read at a high speed, and is used as a working area when the CPU 10 processes information. The ROM 12 is a non-volatile read-only storage medium and stores a program such as firmware. The NVRAM 19 is a non-volatile storage unit into which and from which information can be written and read, and stores a correction value, a difference, and the like (which will be described in detail later) used in a positional deviation correction process. The engine 13 is a mechanism that actually executes image formation in the image forming apparatus 1.

The HDD 14 is a non-volatile storage medium into and from which information can be written and read, and stores an operating system (OS), a variety of control programs, application programs, and the like. The I/F 15 connects the bus 18 to a variety of hardware or a network and performs control thereon. The LCD 16 is a visual user interface enabling a user to check for a state of the image forming apparatus 1. The operation unit 17 is a user interface, such as a key board, a mouse, or the like that enables a user to enter information to the image forming apparatus 1.

In this hardware configuration, a software control unit is configured such that a program, which is stored in a recording medium such as the ROM 12, the HDD 14, an optical disk (not shown), or the like, is read out to the RAM 11 and operates under control of the CPU 10. A functional block for implementing a function of the image forming apparatus 1 according to the present embodiment is configured by a combination of the software control unit configured as described above and the hardware.

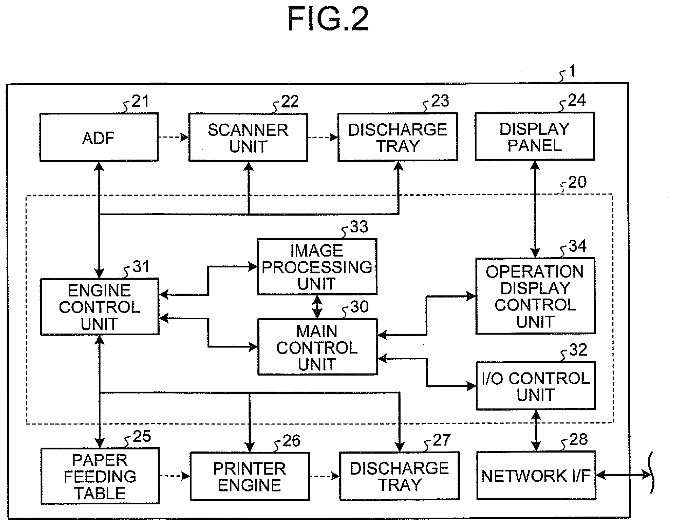

Next, a description will be made in connection with an example of a functional configuration of the image forming apparatus 1 according to the present embodiment. FIG. 2 is a block diagram illustrating an example of a functional configuration of the image forming apparatus 1 according to the present embodiment. As illustrated in FIG. 2, the image forming apparatus 1 according to the present embodiment includes a controller 20, an automatic document feeder (ADF) 21, a scanner unit 22, a discharge tray 23, a display panel 24, a paper feeding table 25, a printer engine 26, a discharge tray 27, a network I/F 28, and the like.

The controller 20 includes a main control unit 30, an engine control unit 31, an input/output (I/O) control unit 32, an image processing unit 33, an operation display control unit 34, and the like. As illustrated in FIG. 2, the image forming apparatus 1 according to the present embodiment is configured as a MFP including the scanner unit 22 and the printer engine 26. In FIG. 2, an electrical connection is indicated by a solid line arrow, and the flow of a paper is indicated by a dotted line arrow.

The display panel 24 is not only an output interface for visually displaying a state of the image forming apparatus 1 but also an input interface (an operation unit) such as a touch panel for enabling a user to directly operate the image forming apparatus 1 or enter information therethrough to the image forming apparatus 1. The network I/F 28 is an interface for enabling the image forming apparatus 1 and other devices to communicate with each other via a network. Interfaces such as Ethernet (a registered trademark) and a universal serial bus (USB) are examples of the network I/F 28.

The controller 20 is configured with a combination of software and hardware. Specifically, for example, the controller 20 is configured with hardware such as an integrated circuit (IC) and software such as a software control unit configured such that a control program such as firmware stored in a non volatile recording medium such as the ROM 12, a non-volatile memory, the HDD 14, or an optical disk is loaded onto a volatile memory (hereinafter, a memory) such as the RAM 11 and operates under control of the CPU 10. The controller 20 functions as the control unit that controls the whole image forming apparatus 1.

The main control unit 30 plays a role of controlling the components included in the controller 20 and gives a command to each component of the controller 20. The engine control unit 31 plays a role as a driving means for controlling or driving the printer engine 26, the scanner unit 22, and the like. The engine control unit 31 has a function of calculating the scanning position of an optical beam in an optical writing device included in the printer engine 26.

The I/O control unit 32 inputs a signal or a command received through the network I/F 28 to the main control unit 30. The main control unit 30 controls the I/O control unit 32 and accesses other devices through the network I/F 28.

The image processing unit 33 generates rendering information (drawing information) based on print information included in a print job input, under control of the main control unit 30. The rendering information refers to information for rendering (drawing) an image to be formed through an image forming operation performed by the printer engine 26 as an image forming unit. The print information included in the print job refers to image information transformed into a format, which is recognizable by the image forming apparatus 1, by a printer driver installed in an information processing device such as a PC. The operation display control unit 34 displays information on the display panel 24 or notifies the main control unit 30 of information input via the display panel 24.

In the case in which the image forming apparatus 1 operates as a printer, the I/O control unit 32 first receives a print job via the network I/F 28. The I/O control unit 32 transmits the received print job to the main control unit 30. The main control unit 30 that has received the print job controls the image processing unit 33 and generates rendering information based on print information included in the print job.

When the rendering information is generated by the image processing unit 33, the engine control unit 31 executes image formation on paper conveyed from the paper feeding table 25 based on the generated rendering information. That is, the printer engine 26 functions as the image forming unit. A document on which image formation has been executed by the printer engine 26 is discharged to the discharge tray 27.

In the case in which the image forming apparatus 1 operates as a scanner, the operation display control unit 34 or the I/O control unit 32 transmits a scanning execution signal to the main control unit 30 in response to the user's operation of the display panel 24 or a scanning execution instruction input from an external PC via the network I/F 28. The main control unit 30 controls the engine control unit 31 based on the received scanning execution signal.

The engine control unit 31 drives the ADF 21 and conveys an image capturing target original set on the ADF 21 to the scanner unit 22. The engine control unit 31 drives the scanner unit 22 and captures an image of the original conveyed from the ADF 21. Further, when an original is set directly on the scanner unit 22 other than the ADF 21, the scanner unit 22 captures an image of the set original under control of the engine control unit 31. That is, the scanner unit 22 operates as an image capturing unit.

In an image capturing operation, an original is optically scanned by an image capturing element such as a charge coupled device (CCD) included in the scanner unit 22; and image capturing information is generated based on optical information. The engine control unit 31 transmits the image capturing information generated by the scanner unit 22 to the image processing unit 33. The image processing unit 33 generates image information based on the image capturing information received from the engine control unit 31. The image information generated by the image processing unit 33 is stored in a storage medium, mounted in the image forming apparatus 1, such as the HDD 14. That is, the scanner unit 22 operates in conjunction with the engine control unit 31 and the image processing unit 33, thereby serving as a document scanning unit.

The image information generated by the image processing unit 33 is stored in the HDD 14 or the like without any change or transmitted to an external device via the I/O control unit 32 and the network I/F 28 in response to the user's instruction. That is, a combination of the ADF 21 and the engine control unit 31 functions as an image input unit.

Meanwhile, in the case in which the image forming apparatus 1 operates as a copying machine, the image processing unit 33 generates rendering information based on the image capturing information that the engine control unit 31 has received from the scanner unit 22 or the image information that the image processing unit 33 has generated. Similarly to the printer operation, the engine control unit 31 drives the printer engine 26 based on the rendering information.

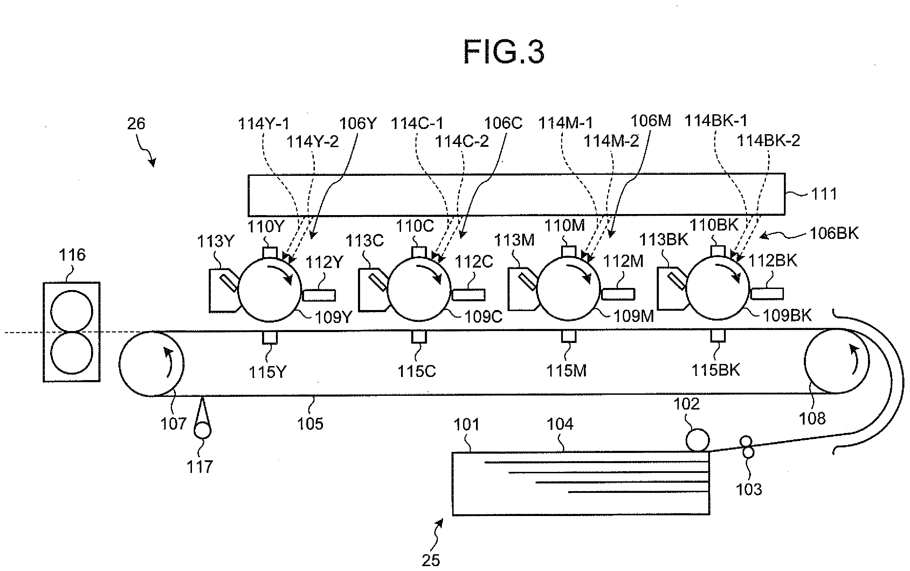

Next, a configuration of the printer engine 26 according to the present embodiment will be described with reference to FIG. 3. As illustrated in FIG. 3, the printer engine 26 according to the present embodiment has a so-called tandem type configuration in which image forming units 106 of respective colors are lined up along a conveying belt 105 that is an endless moving means. That is, a plurality of image forming units (electrophotography processing units) 106BK, 106M, 106C, and 106Y are arranged in this order from an upstream side of the conveying belt 105 in a conveying direction, along the conveying belt 105 that conveys paper (a recording sheet) 104 separated and fed from a paper feed tray 101 by a paper feeding roller 102 and a separation roller 103.

Each of the plurality of image forming units 106BK, 106M, 106C, and 106Y has the same internal configuration except that color of toner image to form is different. The image forming unit 106BK forms a black image; the image forming unit 106M forms a magenta image; the image forming unit 106C forms a cyan image; and the image forming unit 106Y forms a yellow image. The following description will be specifically made focusing on the image forming unit 106BK. However, since the remaining image forming units 106M, 106C, and 106C are the same as the image forming unit 106BK, in the figures, components of each of the remaining image forming units 106M, 106C, and 106Y are denoted with reference numerals discriminated by M, C, and Y instead of BK assigned to components of the image forming unit 106BK, and thus a redundant description thereof will be omitted.

The conveying belt 105 is an endless type belt stretched by a driving roller 107 that is driven to rotate and a driven roller 108. The driving roller 107 is rotationally driven by a driving motor (not shown). The driving motor, the driving roller 107, and the driven roller 108 function as a driving means that moves the conveying belt 105 that is an endless moving means.

At the time of image formation, the paper 104 stored in the paper feed tray 101 is sequentially sent out, from the uppermost one, absorbed onto the conveying belt 105 by an electrostatic absorption action; and then conveyed to the first image forming unit 106BK by the conveying belt 105 that is rotationally driven. Then, a black toner image is transferred onto the paper 104. That is, the conveying belt 105 functions as a conveying body that conveys paper as an image transfer target.

The image forming unit 106BK includes a photosensitive element 109BK as a photosensitive body, a charging unit 110BK, an optical writing device 111, a developing unit 112BK, a photosensitive-element cleaner (not shown), a neutralization unit 113BK, and the like, which are arranged around the photosensitive element 109BK. The optical writing device 111 is configured to emit optical beams (for example, laser beams) 114BK, 114M, 114C, and 114Y onto the photosensitive elements 109BK, 109M, 109C, and 109Y, respectively.

At the time of image formation, the outer circumferential surface of the photosensitive element 109BK is uniformly charged by the charging unit 110BK in the dark, and then writing is performed by the optical beam 114BK corresponding to the black image from the optical writing device 111. As a result, an electrostatic latent image is formed on the outer circumferential surface of the photosensitive element 109BK. The developing unit 112BK converts the electrostatic image into a visible image with use of a black toner. Accordingly, a black toner image is formed on the photosensitive element 109BK.

The toner image is transferred onto the paper 104 by an operation of a transfer unit 115BK at the position (the transfer position) where the photosensitive element 109BK comes into contact with the paper 104 on the conveying belt 105. By this transfer, an image obtained with a black toner is formed on the paper 104. The photosensitive element 109BK that has completed transfer of the toner image is neutralized by the neutralization unit 113BK and stands by for next image formation after an unnecessary toner remaining on the outer circumferential surface thereof is removed by the photosensitive-element cleaner.

The paper 104 having the black toner image transferred by the image forming unit 106BK in the above described way is conveyed to the next image forming unit 106M by the conveying belt 105. In the image forming unit 106M, a magenta toner image is formed on the photosensitive element 109M through a process the same as the image forming process of the image forming unit 106BK, and the toner image is transferred on the black image formed on the paper 104 in a superimposed manner.

Further, the paper 104 is conveyed to the subsequent image forming units 106C and 106Y. Through the same operation, a cyan toner image formed on the photosensitive element 109C and a yellow toner image formed on the photosensitive element 109Y are transferred onto the paper 104 in a superimposed manner. As a result, a full-color image is formed on the paper 104. The paper 104 having the superimposed full-color image formed thereon peels off from the conveying belt 105; the image is fixed by a fixing unit 116; and then the paper 104 is discharged out of the image forming apparatus 1.

In the image forming apparatus 1, the toner images of respective colors may not be superimposed at the position where they have to be originally superimposed, leading to positional deviation between respective colors, for example, due to an error in inter-axis distance of the photosensitive elements 109BK, 109M, 109C, and 109Y, an error in parallelism of the photosensitive elements 109BK, 109M, 109C, and 109Y, an installation error of a deflection mirror inside the optical writing device 111, an error in timing for writing an electrostatic latent image onto the photosensitive elements 109BK, 109M, 109C, and 109Y, or the like.

Further, due to the same causes, an image may be transferred onto a region deviated away from a region in which the image is originally supposed to be transferred in the paper as the transfer target. Components of this positional deviation are known to mainly include a skew, misregistration in a sub scanning direction, a magnification error in a main scanning direction, misregistration in the main scanning direction, and the like. Further known components are expansion and contraction of the conveying belt 105 caused by a change in the temperature inside a device and by a time degradation.

In order to correct the positional deviation, an image detection sensor 117 is disposed. The image detection sensor 117 is an optical sensor that reads (for examples, captures an image of) a rendering (drawing) pattern for correction of positional deviation transferred onto the conveying belt 105 by the photosensitive elements 109BK, 109M, 109C, and 109Y. As illustrated in FIG. 3, the image detection sensor 117 is supported on the same substrate in a direction orthogonal to a conveying direction of the conveying belt 105 at the downstream side of the photosensitive elements 109BK, 109M, 109C, and 109Y. By counting a time from the beginning of a process of writing the rendering pattern on the conveying belt 105 to the detection of the image detection sensor 117 for the rendering pattern, and by comparing the counted time with a corresponding reference value or the like, it is possible to correct the positional deviation in the sub scanning direction. Further, by detecting the length of the rendering pattern or the distance between two points of the rendering pattern apart from each other in the main scanning direction and comparing the detected length or distance with a corresponding reference value or the like, it is possible to correct the positional deviation in the main scanning direction.

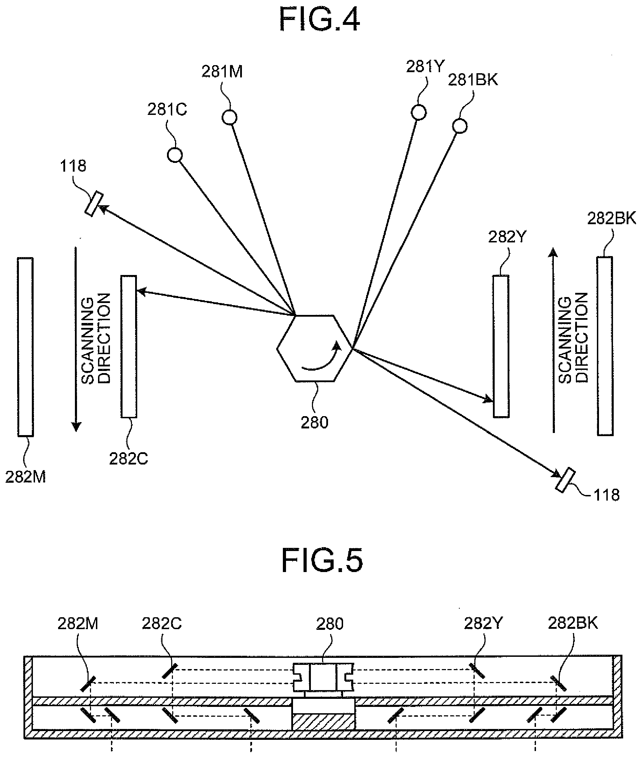

Next, a description will be made in connection with the optical writing device 111 according to the present embodiment. FIG. 4 is a top view illustrating the optical writing device 111 according to the present embodiment. FIG. 5 is a lateral cross-sectional view illustrating the optical writing device 111 according to the present embodiment. As illustrated in FIGS. 4 and 5, optical beams for performing writing on the photosensitive elements 109BK, 109M, 109C, and 109Y for respective colors are emitted from light source devices 281BK, 281Y, 281M, and 281C (hereinafter, referred to collectively as "light source device 281") which are light sources. The light source device 281 according to the present embodiment includes a semiconductor laser, a collimator lens, a slit, a prism, a cylinder, a lens, and the like.

The optical beams emitted from the light source device 281 are reflected by a reflecting mirror 280. The optical beams are guided to mirrors 282BK, 282M, 282C, 282Y (hereinafter, referred to collectively as "282") by an optical system (not shown) such as a fθ lens, and then are made to scan the surfaces of the photosensitive elements 109BK, 109M, 109C, and 109Y by an optical system ahead thereof.

The reflecting mirror 280 is of a shape of hexagonal cylinder with six surfaces of mirrors and can rotate to scan an object with an optical beam corresponding to a line in a main scanning direction per one surface of the polygonal mirror. In the optical writing device 111 according to the present embodiment, the four light source devices are divided into two groups of light source devices, a group of 281BK and 281Y and a group of 281M and 281C; and scanning is performed using different reflecting surfaces of the reflecting mirror 280. Thus, the optical writing device 111 according to the present embodiment can have a more compact configuration than a system that performs scanning using only one reflecting surface, and can also simultaneously perform writing on the different four photosensitive elements.

Further, an optical beam detection sensor 118 is disposed near the scanning start position of a range to be scanned with the optical beam by the reflecting mirror 280. As the optical beam emitted from the light source device 281 is incident to the optical beam detection sensor 118, timing that the start position of a main scanning line is scanned is detected, and a control device controlling the light source device 281 is synchronized with the reflecting mirror 280. Further, the optical beam detection sensor 118 may be disposed near the writing start position and the writing end position of the photosensitive elements 109BK, 109M, 109C, and 109Y. In this case, dot positional deviation in the main scanning direction can be corrected based on the detection result obtained by the optical beam detection sensor 118.

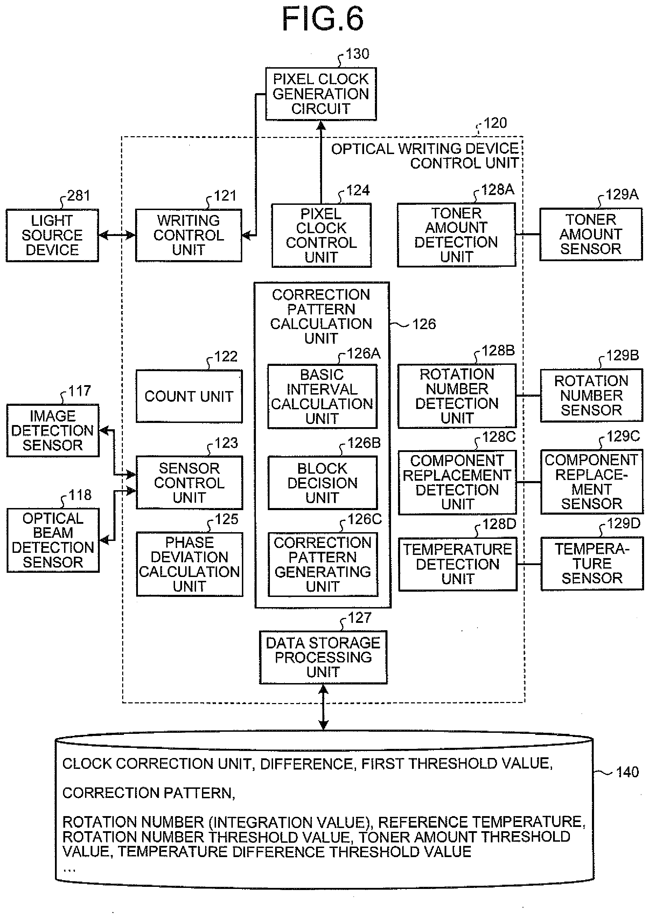

Next, a control circuit of the optical writing device 111 according to the present embodiment will be described with reference to FIG. 6. FIG. 6 illustrates a functional configuration of an optical writing device control unit 120 that controls the optical writing device 111 according to the present embodiment and a connection relation between components thereof.

As illustrated in FIG. 6, for example, the optical writing device control unit 120 according to the present embodiment includes a writing control unit 121, a count unit 122, a sensor control unit 123, a pixel clock control unit 124, a phase deviation calculation unit 125, a correction pattern calculation unit 126, a data storage processing unit 127, a toner amount detection unit 128A, a rotation number detection unit 128B, a component replacement detection unit 128C, a temperature detection unit 128D, and the like. The correction pattern calculation unit 126 includes a basic interval calculation unit 126A, a block decision unit 126B, a correction pattern generating unit 126C, and the like. The optical writing device 111 according to the present embodiment includes an information processing mechanism such as the CPU 10, the RAM 11, the ROM 12, the NVRAM 19, the HDD 14, and the like as described above with reference to FIG. 1; and the optical writing device control unit 120 illustrated in FIG. 6 is configured such that a control program stored in the ROM 12 or the HDD 14 is loaded onto the RAM 11 and operates according to control of the CPU 10, similarly to the controller 20 of the image forming apparatus 1.

The writing control unit 121 controls the light source device 281 according to a synchronization detection signal generated by the optical beam detection sensor 118 based on image information input from the engine control unit 31 of the controller 20. In the present embodiment, the writing control unit 121 corresponds to a light source control unit. The writing control unit 121 not only controls the light source device 281 based on the image information input from the engine control unit 31 but also control the light source device 281 so as to render a rendering pattern for positional deviation correction.

The writing control unit 121 operates based on a pixel clock generated by a pixel clock generating circuit 130 as a pixel clock generating unit. By operating the writing control unit 121 according to a pixel clock train including a correction clock generated by the pixel clock generating circuit 130, the positional deviation in the main scanning direction can be corrected.

The count unit 122 counts a time period from when the writing control unit 121 controls such that the light source device 281 starts exposing the photosensitive element 109BK with light to when the pattern is detected based on an output signal of the image detection sensor 117 in a positional deviation correction process in the sub scanning direction. In a positional deviation correction process in the sub scanning direction, for correcting deviation of toner images of respective colors, the count unit 122 counts detection timing of the rendering pattern intermittently rendered in the sub scanning direction.

In the positional deviation correction process (the dot positional deviation correction process) in the main scanning direction, the count unit 122 may count a time interval at which the optical beam is detected by a pair of optical beam detection sensors 118 corresponding to the photosensitive elements 109BK, 109M, 109C, and 109Y. That is, on each of the photosensitive elements 109BK, 109M, 109C, and 109Y, a time period from when the optical beam is detected by the optical beam detection sensor 118 near the writing start position to when the optical beam is detected by the optical beam detection sensor 118 near the writing end position may be acquired as a count value.

The sensor control unit 123 is a control unit that controls the image detection sensor 117 and the optical beam detection sensor 118. For example, in the positional deviation correction process (the dot positional deviation correction process) in the main scanning direction, the sensor control unit 123 detects the length of the rendering pattern formed on the conveying belt 105 in the main scanning direction, the distance between different two points of the rendering pattern in the main scanning direction, or the like based on the output signal of the image detection sensor 117. The sensor control unit 123 acquires timing at which the optical beam is detected by the optical beam detection sensor 118 based on the output signal of the optical beam detection sensor 118. The acquired timing is input to the count unit 122.

The phase deviation calculation unit 125 calculates the phase deviation in the main scanning direction based on the detection result by the image detection sensor 117 or the detection result by the optical beam detection sensor 118. For example, if Ls is the detection length in the main scanning direction by the detection result by the image detection sensor 117 and Lr is a corresponding reference length, an error ΔL of the length in the main scanning direction may be calculated as in ΔL=Ls-Lr. Here, if Nr1 is a count value corresponding to a scanning time of the reference length Lr in the main scanning direction, the phase deviation calculation unit 125 may calculate a count value ΔN corresponding to the phase deviation as in ΔN=Nr1×ΔL/Lr.

For example, if Ns is a count value corresponding to a time difference in the main scanning direction by the detection result by the pair of optical beam detection sensors 118 and Nr2 is a reference count value corresponding to a timing difference between the pair of optical beam detection sensors 118, the phase deviation calculation unit 125 may calculate a count value ΔN corresponding to the phase deviation as in ΔN=Nr2-Ns.

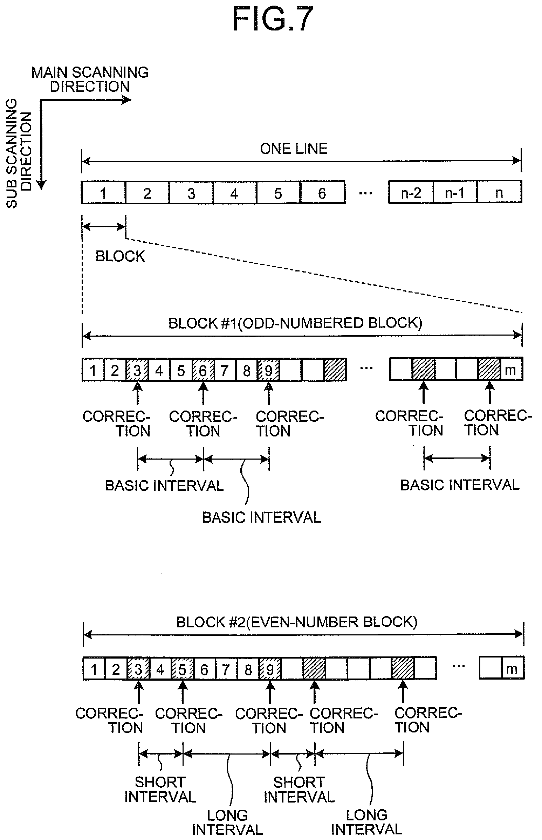

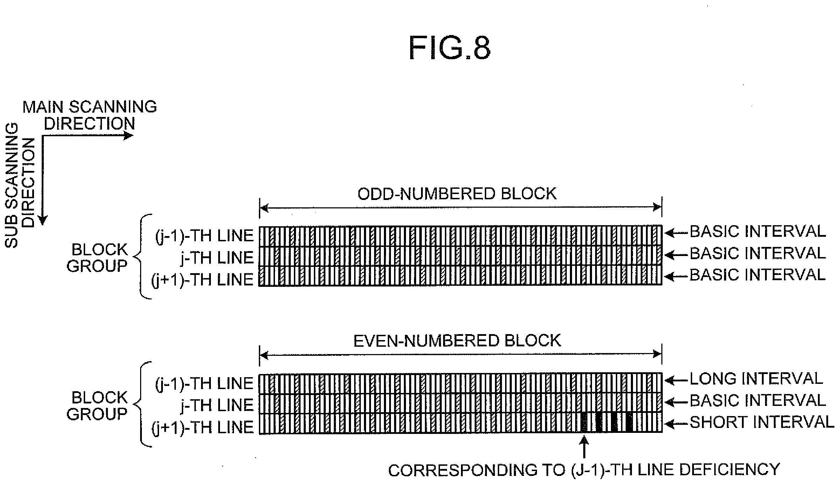

The correction pattern calculation unit 126 calculates a correction pattern of a pixel clock based on the count value ΔN corresponding to the phase deviation calculated by the phase deviation calculation unit 125. The correction pattern refers to a pattern including a correction clock in a pixel clock train (or in a block). The correction pattern calculation unit 126 may include the basic interval calculation unit 126A, the block decision unit 126B, the correction pattern generating unit 126C, and the like as illustrated in FIG. 6. Next, a calculation of the correction pattern by the correction pattern calculation unit 126 will be described with reference to FIG. 7. In FIG. 7, a small square or a small rectangle represents one pulse of the pixel clock. A horizontal direction is the main scanning direction (scanning from the left to the right), and a vertical direction is the sub scanning direction (scanning from the top to the bottom). A basic clock is represented by white, and a correction clock is represented by hatching. This notation is similarly applied even in FIGS. 8 to 11.

The pixel clock generating circuit 130 generates a pixel clock train in which the correction clock having a different time length from the basic clock is intermittently inserted into a basic clock train corresponding to one line in the main scanning direction. For example, the pixel clock generating circuit 130 may output the pixel clock train with a desired correction pattern by outputting the correction clock at timing at which an instruction signal for outputting the correction clock is received from the pixel clock control unit 124 and by outputting the basic clock at the other timings. For example, the pixel clock generating circuit 130 that performs the above described process may be configured with a well-known circuit disclosed in Japanese Patent Application Laid-Open No. 2007-203739, for example, a circuit (not shown) including a high frequency clock generating circuit, a counter, a comparison circuit, a clock generating circuit, a selection circuit, and the like.

Preferably, a clock having a cycle reduced or increased by a clock correction unit (for example, one pulse of a high frequency clock which is a source of a pixel clock) is used as the correction clock; and the correction clock is intermittently and dispersedly inserted into the basic clock train corresponding to one line in the main scanning direction. At the time of calculating a pattern, that is, a correction pattern of inserting the correction clock into the basic clock train, the correction pattern calculation unit 126 first calculates the number of correction clocks to be inserted into the basic clock train corresponding to one line in the main scanning direction (the number of correction clocks in the pixel clock train corresponding to one line in the main scanning direction) by dividing the phase deviation by the clock correction unit. For example, if ΔN is a count value corresponding to the phase deviation and ΔNm is a count value corresponding to a clock correction unit, the correction pattern calculation unit 126 calculates the insertion number Ni of correction clocks as in Ni=ΔN/ΔNm. Further, for example, when counting by the count unit 122 is performed by the high frequency and the clock correction unit corresponds to one pulse of the high frequency clock, ΔNm becomes one (1), and thus the insertion number Ni of correction clocks Ni becomes equal to ΔN.

The basic interval calculation unit 126A calculates a basic interval as an insertion interval at which the correction clock is inserted at regular intervals into the basic clock train corresponding to one line in the main scanning direction. If the number of pixel clocks of one line in the main scanning direction is Nt, the basic interval calculation unit 126A calculates a basic interval Ib as in Ib=Nt/Ni (here, Ib is an integer)

The block decision unit 126B divides the pixel clock train corresponding to one line in the main scanning direction into a plurality of blocks. The block refers to a collection of a plurality of pixel clocks. In the example of FIG. 7, the block decision unit 126B divides the pixel clock train corresponding to one line in the main scanning direction into n blocks each of which includes m pixel clocks. At the time of block division, the block decision unit 126B may perform division into a plurality of blocks which are the same in the number of clocks. As a result, the correction pattern generated on one block may apply to another block, and generation of the correction pattern can be more simplified. Further, the block decision unit 126B may set the number of pixel clocks included in each block to an aliquot of a total of the number of pixel clocks included in one line. As a result, the correction pattern of the entire one line can be easily decided in units of blocks. When surplus pixel clocks that are not included in each block are generated, the correction patterns of the surplus pixel clocks may be preferably decided.

The correction pattern generating unit 126C generates the correction pattern. In the example of FIG. 7, an odd-number-th block in the main scanning direction (hereinafter, referred to as "odd-number block") is different in correction pattern from an even-number-th block (hereinafter, referred to as "even-number block"). In the odd-number block, the correction clock having a cycle different from the basic clock is repetitively and intermittently inserted into the basic clock train at the basic interval (in the example of FIG. 7, the basic interval is 3) calculated by the basic interval calculation unit 126A. However, in the even-number block, the correction clock inserted at a long interval (the long interval is 4 in the example of FIG. 7) longer by a difference than the basic interval and the correction clock inserted at a short interval (the short interval is 2 in the example of FIG. 7) shorter by a difference (one clock in this example) than the basic interval are alternately inserted into the basic clock train. In the even-number block, the short interval and the long interval are alternately repeated; and the number of clocks corresponding to a combination of the short interval and the long interval is equal to the number of clocks corresponding to the two basic intervals. Thus, it is relatively easy to make the number of times of inserting the correction clock in the even-number block be consistent with the number of times of inserting the correction clock in the odd-number block. By generating a different correction pattern for each block as illustrated in FIG. 7, the correction pattern including the correction clock can be easily changed within one line; and image degradation caused by the arrangement of the correction clock can be easily suppressed. Further, in adjacent lines in the sub scanning direction, by setting a block #1 of FIG. 7 as the odd-number block and a block #2 as the even-number block, blocks adjacent to each other in the sub scanning direction are allowed to differ in correction pattern; and thus image degradation caused by the arrangement of the correction clock can be easily suppressed. Further, in the block decision unit 126B, by setting the number of clocks of each block to an even-number multiple of the basic interval, it is possible to easily match the number of correction clocks of the block in which the correction clocks are included alternately at the short interval and at the long interval with the number of correction clocks of the block in which the correction clocks are repetitively included at the basic interval. Thus, it would be understood that the number of correction clocks can be more easily managed. The number of clocks of the difference may be set to a value larger than one clock. In this case, the correction clocks can be more dispersedly arranged. In the case of the example of FIG. 7, the correction pattern generating unit 126C decides the correction pattern so that the insertion number of correction clocks into the pixel clock train corresponding to one line in the main scanning direction can be equal to the previously calculated insertion number Ni.

The correction pattern generating unit 126C may generate the correction pattern in units of block groups each of which includes a plurality of blocks adjacent to each other in the sub scanning direction. In an example of FIG. 8, a block group composed of three blocks is set on a j-th line in the sub scanning direction, a (j-1)-th line adjacent to the j-th line, and a (j+1)-th line adjacent to the j-th line. As for the block group including three odd-number blocks adjacent to each other in the sub scanning direction (odd-number-th blocks in the main scanning direction), in all of the three odd-number blocks, the correction clocks are included at the basic interval (in this example, the basic interval is 4). However, the blocks are different in timing at which the correction blocks are included. Further, as for the block group including three even-number blocks adjacent to each other in the sub scanning direction (even-number-th blocks in the main scanning direction), in the block of the j-th line, the correction clocks are included at the basic interval (=4); in the block of the (j-1)-th line, the correction clocks are included at the long interval (=5); and in the block of the (j+1)-th line, the correction clocks are included at the short interval (=3). In the block in which the correction clocks are included at the short interval, the correction clocks (black rectangles in FIG. 8) are complemented so as to make up for deficiency in the number of correction clocks in the block in which the correction clocks are included at the long interval. That is, in the example of FIG. 8, in the block in which the correction clocks are included at the long interval, the number of correction clocks is smaller than in an optimum state; and in the block in which the correction clocks are included at the short interval, the number of correction clocks is larger than in the optimum state; but the number of correction clocks becomes optimum in view of the block group. That is, in this example, by setting the optimum number of correction clocks for every block group adjacent to each other in the sub scanning direction, it is possible to suppress the occurrence of the positional deviation in the sub scanning direction caused by accumulation of the difference in the number of correction clocks. Further, in the case of the example of FIG. 8, the correction pattern generating unit 126C decides the correction pattern so that the insertion number of correction clocks into the pixel clock train corresponding to three lines in the main scanning direction can be three times the previously calculated insertion number Ni. That is, in this example, there is a possibility that a line in which the insertion number of correction clocks is not equal to the optimum insertion number Ni is present; but on a plurality of lines (in the example of FIG. 8, three lines) that are adjacent to each other in the sub scanning direction and belong to the block group, the insertion number of correction clocks is three times the optimum insertion number Ni. Thus, it is possible to suppress the difference in the insertion number of correction clocks, that is, the phase deviation from being accumulated in the sub scanning direction and becoming the positional deviation or the color deviation in the sub scanning direction while further suppressing image degradation caused by an arrangement of the correction clock. In addition, even though not shown, there may be used a correction pattern configured such that the block group composed of the block of the (j-1)-th line in which the correction clocks are included at the short interval (=3), the block of the j-th line in which the correction clocks are included at the basic interval (=4), and the block of the (j+1)-th line in which the correction clocks are included at the long interval (=5) is adjacent to the block group indicated in the lower part of FIG. 8 in the main scanning direction. In this case, in each line in the main scanning direction, it is easy to appropriately set the number of correction blocks.

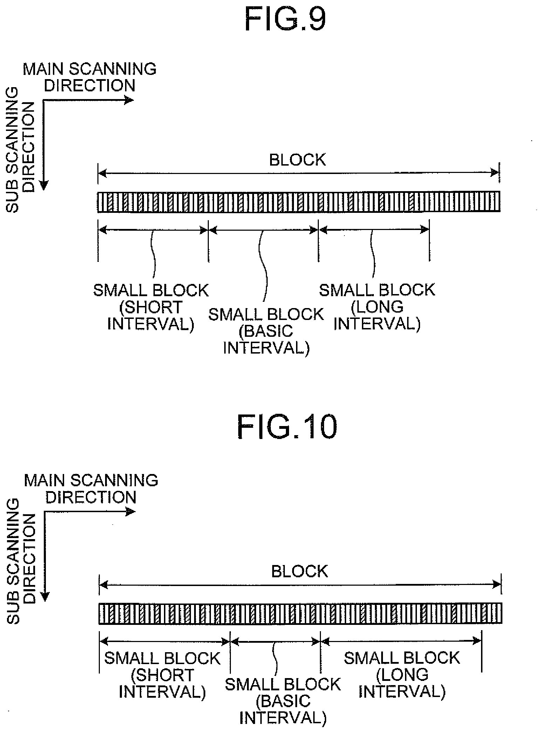

Further, the correction pattern generating unit 126C may generate a correction pattern in which an interval changes in units of small blocks into which the block is subdivided. In an example of FIG. 9, the block is subdivided into small blocks including the same pixel clocks; and the adjacent small blocks are different in the interval of the correction clocks. In an example of FIG. 10, the small blocks are different in the number of pixel clocks. By alternately or randomly arranging the block illustrated in FIG. 9 or 10 in the pixel clock train corresponding to one line in the main scanning direction, image degradation caused by a regular arrangement of the correction clocks can be easily suppressed.

The data storage processing unit 127 illustrated in FIG. 6 stores the generated correction pattern in a storage unit 140. That is, the data storage processing unit 127 corresponds to a correction pattern storage processing unit. The storage unit 140 is preferably a non-volatile storage unit and may be configured with the HDD 14 or the NVRAM 19 of FIG. 1. The data storage processing unit 127 stores the correction pattern for each block or each block group in the storage unit 140, for example, together with data that represents a combination, an order, and an arrangement of the correction pattern of each block or each block group. The pixel clock control unit 124 refers to data stored in the storage unit 140 and transmits a control signal to the pixel clock generating circuit 130 so that the correction clock can be included in the pixel clock train according to the stored correction pattern. Through this configuration, compared to the case of storing the correction patterns corresponding to one line or a plurality of lines in the main scanning direction, the storage capacity of the correction pattern can be reduced.

In addition, as illustrated in FIG. 6, the optical writing device control unit 120 according to the present embodiment includes the toner amount detection unit 128A, the rotation number detection unit 128B, the component replacement detection unit 128C, and the temperature detection unit 128D and updates the correction pattern based on the detection results thereof.

The toner amount detection unit 128A detects the used amount of toner based on a detection signal of a toner amount sensor 129A. At each time when the toner amount detected by the toner amount detection unit 128A becomes a predetermined amount (a toner threshold value), the correction pattern calculation unit 126 generates the correction pattern and stores the generated correction pattern in the storage unit 140 through the data storage processing unit 127.

The rotation number detection unit 128B calculates the rotation number (an integration value) of the conveying belt 105 based on a detection signal of a rotation number sensor 129B. At each time when the rotation number (the integration value) calculated by the rotation number detection unit 128B reaches a predetermined number (a rotation number threshold value), the correction pattern calculation unit 126 generates the correction pattern and stores the generated correction pattern in the storage unit 140 through the data storage processing unit 127.

The component replacement detection unit 128C detects whether or not the replacement of a component (for example, the conveying belt 105 or the photosensitive element unit including the photosensitive elements 109BK, 109M, 109C, and 109Y) has been performed based on a detection signal of a component replacement sensor 129C. For example, the component replacement sensor 129C may be configured with a sensor or a switch of a contact type or a non-contact type in which "on" and "off" are switched by mounting and removal of a component. At each time when the replacement of a predetermined component is detected by the component replacement sensor 129C, the correction pattern calculation unit 126 generates the correction pattern and stores the generated correction pattern in the storage unit 140 through the data storage processing unit 127.

The temperature detection unit 128D detects the temperature inside the device based on a detection signal of a temperature sensor 129D. When a temperature difference between the detected temperature and a reference temperature exceeds a predetermined threshold value (a temperature threshold value), the correction pattern calculation unit 126 generates the correction pattern and stores the generated correction pattern in the storage unit 140 through the data storage processing unit 127.

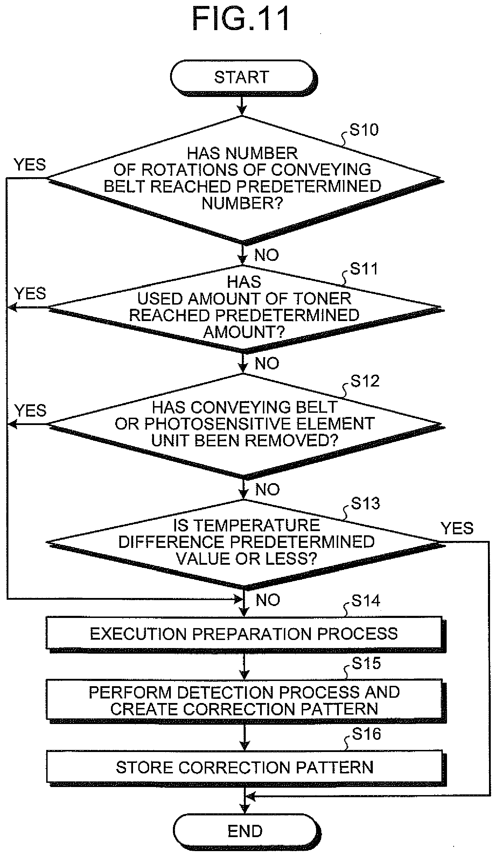

That is, as illustrated in FIG. 11, when the rotation number reaches a predetermined number (Yes in step S10); when the used amount of toner becomes a predetermined amount (Yes in step S11); when the conveying belt 105 or the photosensitive element unit is removed and mounted (replaced) (Yes in step S12); when the temperature difference is a predetermined value or less (No in step S13), or the like, the correction pattern calculation unit 126 executes step S14 to step S16. In this case, in step S14, first, the correction pattern calculation unit 126 executes a preparation process. For example, the correction pattern calculation unit 126 controls the writing control unit 121 so that the optical beam detected by the optical beam detection sensor 118 can be irradiated toward the photosensitive elements 109BK, 109M, 109C, and 109Y; or controls the writing control unit 121 so that the rendering data detected by the image detection sensor 117 can be formed on the conveying belt 105. Subsequently, in step S15, the correction pattern calculation unit 126 generates the correction pattern based on the detection processing result by the sensor control unit 123. In step S16, the data storage processing unit 127 stores the generated correction pattern in the storage unit 140. The pixel clock control unit 124 controls the pixel clock generating circuit 130 based on the correction pattern stored in the storage unit 140; and the pixel clock generating circuit 130 generates the pixel clock according to the generated correction pattern.

As described above, in the present embodiment, the pixel clock train, generated by the pixel clock generating circuit 130 as an example of the pixel clock generating unit, is generated from a plurality of blocks each of which includes a plurality of basic clocks and a plurality of correction clocks and includes a plurality of blocks which are different from each other in correction pattern in which the correction clocks are inserted. Thus, by changing the correction pattern in units of blocks, image degradation caused by a regular arrangement of the correction clocks can be easily suppressed. Further, by setting the correction pattern in units of blocks, compared with the case of generating the correction patterns corresponding to one line or a plurality of lines in the main scanning direction, not only the correction pattern can be more easily generated; but also the storage capacity of the correction pattern stored in the storage unit can be reduced.

Further, in the present embodiment, the pixel clock train may include two blocks which are adjacent to each other in the main scanning direction and different from each other in correction pattern. In this case, the correction pattern can be prevented from becoming continuously regular in the main scanning direction; and image degradation caused by an arrangement of the correction clocks can be easily suppressed.

Further, in the present embodiment, at least one block may alternately include a correction clock inserted at a long interval longer by a predetermined difference than a predetermined interval and a correction clock inserted at a short interval shorter by a predetermined difference than a predetermined interval. In this case, it is possible to more easily suppress the correction clocks from being regularly arranged inside the block; and it is possible to more easily suppress image degradation caused by a regular arrangement of the correction clock. Further, since a combination of the short interval and the long interval is equal to predetermined two intervals, the ratio of the number of correction clocks included in the block can be more easily managed, for example, can be kept constant.

Further, in the present embodiment, at least one block may include a plurality of small blocks into which the correction clocks are repetitively inserted at different intervals. In this case, since it is possible to change the interval of the correction clocks inside the block in units of small blocks, it is possible to more easily suppress the correction clocks from being regularly arranged inside the block; and it is possible to more easily suppress image degradation caused by an arrangement of the correction clock.

Further, in the present embodiment, a plurality of pixel clock trains corresponding to a plurality of lines adjacent to each other in the sub scanning direction may include a block group composed of a plurality of blocks that are different in the correction pattern corresponding to areas adjacent to each other in the sub scanning direction. In this case, it is possible to suppress the correction clocks from being regularly arranged in the sub scanning direction; and it is possible to more easily suppress image degradation caused by an arrangement of the correction clock.

Further, in the present embodiment, a plurality of pixel clock trains corresponding to a plurality of lines adjacent to each other in the sub scanning direction may include a plurality of block groups which are the same in the insertion number of correction clocks. In this case, by managing the insertion number of correction clocks in units of block groups, it is possible to easily suppress the positional deviation or the color deviation in the sub scanning direction from occurring due to the difference in the insertion number of correction clocks. Further, it is possible to easily prevent the correction clocks from being regularly arranged between the lines adjacent to each other in the sub scanning direction; and it is possible to further easily suppress image degradation caused by an arrangement of the correction clock.

Further, in the present embodiment, the block group may include a block that includes the correction clocks repetitively inserted at a long interval longer by a predetermined difference than a predetermined interval and a block that includes the correction clocks repetitively inserted at a short interval longer by a predetermined difference than a predetermined interval. In this case, it is possible to more easily change the insertion pattern of the correction clock in the sub scanning direction; and it is possible to further easily suppress image degradation caused by an arrangement of the correction clock.

Further, in the present embodiment, the block group may include: a block that includes the correction clocks repetitively inserted at a predetermined interval; a block that includes the correction clocks repetitively inserted at a long interval; and a block that includes the correction clocks repetitively inserted at a short interval. In this case, since three kinds of different correction patterns are included, it is possible to more easily obtain the pixel clock train through which it is possible to further easily suppress image degradation caused by an arrangement of the correction clock.

Further, in the present embodiment, the data storage processing unit 127, as an example of the correction pattern storage processing unit, may store the correction pattern in the predetermined storage unit 140; and the pixel clock generating circuit 130 as an example of the pixel clock generating unit may generate the pixel clock train according to the stored correction pattern. In this case, it is unnecessary to calculate the correction pattern at each time when the image forming process is executed; and so a processing load of the control unit of the image forming apparatus can be reduced.

Further, in the present embodiment, the data storage processing unit 127 as an example of the correction pattern storage processing unit may store the correction pattern on some of blocks included in the pixel clock train in the predetermined storage unit 140. Further, the data storage processing unit 127 as an example of the correction pattern storage processing unit may store the correction pattern on some of block groups included in a plurality of pixel clock trains in the predetermined storage unit 140. In this case, compared to the case in which the correction pattern is stored on one line or all of a plurality of lines, the storage capacity of the storage unit 140 can be reduced.

Further, in the present embodiment, at each time when the rotation number of the conveying belt 105 as an example of a conveying body reaches a predetermined number; at each time when the used amount of toner used for image formation becomes a predetermined amount; at each time when the conveying belt 105 or the photosensitive element unit including the photosensitive elements 109BK, 109M, 109C, and 109Y is replaced; or when the difference between the temperature detected by the temperature sensor 129D as an example of a temperature sensor and the reference temperature stored in the storage unit 140 as an example of a predetermined storage unit exceeds a predetermined value, then the correction pattern generating unit 126C as an example of the correction pattern generating unit generates the correction pattern; and the pixel clock generating circuit 130 as the pixel clock generating unit generates the pixel clock train according to the generated correction pattern. Thus, when the state of the device such as the conveying belt 105 changes, the correction pattern can be updated, and thus it is possible to reliably easily suppress image degradation caused by an arrangement of the correction clock.

Meanwhile, the components included in the optical writing device control unit 120 may be configured by a program that operates the optical writing device control unit 120. In this case, in the image forming apparatus, when the user turns on electrical power, an OS is read into the RAM 11 from the ROM 12, the HDD 14, or the like and activated by the CPU 10. The activated OS reads out an application program into the RAM 11 from the ROM 12, the HDD 14, or the like in response to the user's operation and activates the application program; reads in information; or stores information. The application program is not limited to operating on a predetermined OS. The application program may allow execution of part of various processes which will be described later to be taken over to the OS; or may be included as part of a group of program files that configure a predetermined application program, an OS, or the like.

An application program installed in the HDD 14 or the like is recorded in a storage medium such as a compact disc-read only memory (CD-ROM) (not shown) or the like; and the application program recorded in the storage medium is installed in the HDD or the like. That is, a storage medium having portability such as a CD-ROM may be used as a storage medium that stores the application program. Further, for example, the application program may be fed from the outside via a communication interface (not shown) with the outside and installed into the HDD or the like.

Further, by executing the application program retained in the RAM 11, the CPU 10 operates as the phase deviation calculation unit 125, the correction pattern calculation unit 126, the data storage processing unit 127, the pixel clock control unit 124, or the like, which are illustrated in FIG. 6. In this case, the program includes modules causing the CPU 10 to operate as the phase deviation calculation unit 125, the correction pattern calculation unit 126, the data storage processing unit 127, the pixel clock control unit 124, or the like.

The exemplary embodiment of the present embodiment has been described above. However, the present invention is not limited to the above embodiment, and various modifications can be made. For example, a generation example of the correction pattern is not limited to the above described example; and various modified examples may be considered. The number of pixel clocks included in the block, the number of blocks included in the block group, the number of blocks corresponding to one line in the main scanning direction, or the like may be appropriately changed.

The program executed by the image forming apparatus of the above embodiment may be of a file having an installable format or an executable format. The program may be configured to be distributed in the form recorded in a computer readable recording medium such as a CD-ROM, a flexible disk (FD), a compact disc-recordable (CD-R), or a digital versatile disk (DVD).

Further, the program executed by the image forming apparatus of the above embodiment may be configured to be provided such that it is stored in a computer connected to a network such as the Internet and is downloaded via the network. Furthermore, the program executed by the image forming apparatus 1 of the above embodiment may be configured to be provided or distributed via the network such as the Internet.

According to the present embodiment, it is possible to obtain a pixel clock generating device and an image forming apparatus in which image degradation is more difficult to occur by changing a correction pattern, as a pattern in which a correction clock is inserted in units of blocks.

The present invention is defined by the subject-matter of the independent claims. Preferred embodiments are defined by the dependent claims.

## Claims

1. A pixel clock generating device comprising:
a pixel clock generating unit (130) configured to generate a pixel clock train in which a correction clock having a time length different from that of a basic clock is intermittently inserted in a basic clock train corresponding to one line in a main scanning direction,
wherein each pixel clock train is generated based on a plurality of blocks including a plurality of basic clocks and a plurality of correction clocks, wherein the number of clocks in each block is the same, and
wherein the pixel clock train includes a plurality of blocks that are different in a correction pattern as a pattern in which the correction clock is inserted,
**characterized by** each odd-numbered block in the main scanning direction having a first correction pattern that is different from a second correction pattern of each even-numbered block in the main scanning direction.

2. The pixel clock generating device according to claim 1,
wherein each block in the first correction pattern or the second correction pattern alternately includes correction clocks inserted at a long interval that is longer by a predetermined difference than a predetermined interval and correction clock inserted at a short interval that is shorter by the predetermined difference than the predetermined interval.

3. The pixel clock generating device according to claim 1 or 2,
wherein each block in the first correction pattern or the second correction pattern includes a plurality of small blocks that differ in an interval at which the correction clock is repetitively inserted.

4. The pixel clock generating device according to any one of claims 1 to 3,
wherein a plurality of pixel clock trains, corresponding to a plurality of lines adjacent to each other in a sub scanning direction, include a block group,
each block group including the plurality of blocks that differ in the correction pattern corresponding to areas adjacent to each other in the sub scanning direction.

5. The pixel clock generating device according to claim 4 when dependent on claim 1 or claim 2,
wherein the block group includes
a block including a correction clock repetitively inserted at a long interval that is longer by a predetermined difference than a predetermined interval and
a block including a correction clock repetitively inserted at a short interval that is shorter by the predetermined difference than the predetermined interval.

6. The pixel clock generating device according to claim 5,
wherein the block group includes
a block including a correction clock repetitively inserted at the predetermined interval, and
a block including a correction clock repetitively inserted at the long interval and a correction clock repetitively inserted at the short interval.

7. The pixel clock generating device according to any one of claims 1 to 6, further comprising
a correction pattern storage processing unit (127, 140) configured to store the correction pattern in a predetermined storage unit (140),
wherein the pixel clock generating unit (130) is configured to generate the pixel clock train according to the stored correction pattern.

8. An image forming apparatus (1) comprising:
the pixel clock generating unit (130) included in the pixel clock generating device set forth in any one of claims 1 to 7;
a light source control unit (121) configured to control a light source so that the light source emits an optical beam onto a photosensitive element according to the pixel clock train generated by the pixel clock generating unit (130);
a phase deviation calculation unit (125) configured to calculate a phase deviation in a main scanning direction based on a detection result of an image detection unit configured to detect a rendering pattern formed on the photosensitive element or of an optical beam detection unit configured to detect an optical beam emitted toward the photosensitive element; and
a correction pattern generating unit (126C) configured to generate the correction pattern based on a calculation result by the phase deviation calculation unit (125).

9. An image forming apparatus (1), comprising:
the pixel clock generating unit (130) included in the pixel clock generating device set forth in claim 7;
a light source control unit (121) configured to control a light source so that the light source emit an optical beam to a photosensitive element according to the pixel clock train generated by the pixel clock generating unit (130);
a phase deviation calculation unit (125) configured to calculate a phase deviation in a main scanning direction based on a detection result of an image detection unit configured to detect a rendering pattern formed on the photosensitive element or of an optical beam detection unit configured to detect an optical beam emitted toward the photosensitive element;
a conveying body; and
a correction pattern generating unit (126C) that generates the correction pattern based on a calculation result by the phase deviation calculation unit (125),
wherein
every time when the conveying body has rotated a predetermined number of times, the correction pattern generating unit (126C) generates the correction pattern, and
the pixel clock generating unit (130) generates the pixel clock train according to the generated correction pattern.

10. An image forming apparatus (1), comprising:
the pixel clock generating unit (130) included in the pixel clock generating device set forth in claim 7;
a light source control unit (121) configured to control a light source so that the light source emits an optical beam to a photosensitive element according to the pixel clock train generated by the pixel clock generating unit (130);
a phase deviation calculation unit (125) configured to calculate a phase deviation in a main scanning direction based on a detection result of an image detection unit configured to detect a rendering pattern formed on the photosensitive element or of an optical beam detection unit configured to detect an optical beam emitted toward the photosensitive element;
a toner; and
a correction pattern generating unit (126C) configured to generate the correction pattern based on a calculation result of the phase deviation calculation unit (125),
wherein
every time when a use amount of the toner that is used for image formation reaches a predetermined amount, the correction pattern generating unit (126C) is configured to generate the correction pattern, and
the pixel clock generating unit (130) is configured to generate the pixel clock train according to the generated correction pattern.

11. An image forming apparatus (1), comprising:
the pixel clock generating unit (130) included in the pixel clock generating device set forth in claim 7;
a photosensitive element unit including a photosensitive element;
a light source control unit (121) configured to control a light source so that the light source emits an optical beam to the photosensitive element according to the pixel clock train generated by the pixel clock generating unit (130);
a phase deviation calculation unit (125) configured to calculate phase deviation in a main scanning direction based on a detection result of an image detection unit configured to detect a rendering pattern formed on the photosensitive element or of an optical beam detection unit configured to detect an optical beam emitted toward the photosensitive element;
a conveying belt; and
a correction pattern generating unit (126C) configured to generate the correction pattern based on a calculation result of the phase deviation calculation unit (125),
wherein
every time when the conveying belt or the photosensitive element unit including the photosensitive element is replaced, the correction pattern generating unit (126C) is configured to generate the correction pattern, and
wherein the pixel clock generating unit (130) is configured to generate the pixel clock train according to the generated correction pattern.

12. An image forming apparatus (1), comprising:
the pixel clock generating unit (130) included in the pixel clock generating device set forth in claim 7;
a light source control unit (121) configured to control a light source so that the light source emits an optical beam onto a photosensitive element according to the pixel clock train generated by the pixel clock generating unit (130);
a phase deviation calculation unit (125) configured to calculate a phase deviation in a main scanning direction based on a detection result of an image detection unit configured to detect a rendering pattern formed on the photosensitive element or of an optical beam detection unit configured to detect an optical beam emitted toward the photosensitive element;
a correction pattern generating unit (126C) configured to generate the correction pattern based on a calculation result of the phase deviation calculation unit (125); and
a temperature sensor configured to detect a temperature inside the image forming apparatus (1),
wherein
when a difference between the temperature detected by the temperature sensor and a reference temperature stored in the predetermined storage unit (140) exceeds a predetermined value, the correction pattern generating unit (126C) is configured to generate the correction pattern, and
the pixel clock generating unit (130) is configured to generate the pixel clock train according to the generated correction pattern.

## Patentansprüche

1. Pixeltakt-Erzeugungsvorrichtung, umfassend:
eine Pixeltakt-Erzeugungseinheit (130), die dafür konfiguriert ist, eine Pixeltaktfolge zu erzeugen, bei der ein Korrekturtakt mit einer zeitlichen Länge, die sich von jener eines Basistakts unterscheidet, intermittierend in eine Basistaktfolge eingefügt wird, die einer Zeile in einer Hauptabtastrichtung entspricht,
worin jede Pixeltaktfolge auf der Grundlage einer Vielzahl von Blöcken erzeugt wird, die eine Vielzahl von Basistakten und eine Vielzahl von Korrekturtakten einschließt,
worin die Anzahl der Takte in jedem Block gleich ist, und
worin die Pixeltaktfolge eine Vielzahl von Blöcken einschließt, die sich in einem Korrekturmuster als einem Muster, in dem der Korrekturtakt eingefügt wird, unterscheiden,
**dadurch gekennzeichnet, dass** jeder ungeradzahlige Block in der Hauptabtastrichtung ein erstes Korrekturmuster aufweist, das sich von einem zweiten Korrekturmuster jedes geradzahligen Blocks in der Hauptabtastrichtung unterscheidet.

2. Pixeltakt-Erzeugungsvorrichtung nach Anspruch 1,
worin jeder Block im ersten Korrekturmuster oder zweiten Korrekturmuster abwechselnd einschließt: Korrekturtakte, die in einem langen Abstand eingefügt werden, der um eine vorbestimmte Differenz länger als ein vorbestimmter Abstand ist, und Korrekturtakte, die in einem kurzen Abstand eingefügt werden, der um die vorbestimmte Differenz kürzer als der vorbestimmte Abstand ist.

3. Pixeltakt-Erzeugungsvorrichtung nach Anspruch 1 oder 2,
worin jeder Block im ersten Korrekturmuster oder zweiten Korrekturmuster eine Vielzahl von kleinen Blöcken einschließt, die sich in einem Abstand unterscheiden, in dem der Korrekturtakt wiederholt eingefügt wird.

4. Pixeltakt-Erzeugungsvorrichtung nach einem der Ansprüche 1 bis 3,
worin eine Vielzahl von Pixeltaktfolgen, die einer Vielzahl von Linien entsprechen, die in einer Nebenabtastrichtung nebeneinanderliegen, eine Blockgruppe einschließt,
wobei jede Blockgruppe die Vielzahl von Blöcken einschließt, die sich im Korrekturmuster entsprechend Bereichen unterscheiden, die in der Nebenabtastrichtung nebeneinanderliegen.

5. Pixeltakt-Erzeugungsvorrichtung nach Anspruch 4, wenn von Anspruch 1 oder Anspruch 2 abhängig,
worin die Blockgruppe umfasst:
einen Block, der einen Korrekturtakt einschließt, der wiederholt in einem langen Abstand eingefügt wird, der um eine vorbestimmte Differenz länger als ein vorbestimmter Abstand ist, und
einen Block, der einen Korrekturtakt einschließt, der wiederholt in einem kurzen Abstand eingefügt wird, der um die vorgegebene Differenz kürzer als der vorgegebene Abstand ist.

6. Pixeltakt-Erzeugungsvorrichtung nach Anspruch 5,
worin die Blockgruppe einschließt:
einen Block, der einen Korrekturtakt einschließt, der im vorgegebenen Abstand wiederholt eingefügt wird, und
einen Block, der einen im langen Abstand wiederholt eingefügten Korrekturtakt und einen im kurzen Abstand wiederholt eingefügten Korrekturtakt einschließt.

7. Pixeltakt-Erzeugungsvorrichtung nach einem der Ansprüche 1 bis 6, ferner umfassend:
eine Korrekturmuster-Speicherverarbeitungseinheit (127, 140), die dafür konfiguriert ist, das Korrekturmuster in einer vorbestimmten Speichereinheit (140) zu speichern,
worin die Pixeltakt-Erzeugungseinheit (130) dafür konfiguriert ist, die Pixeltaktfolge gemäß dem gespeicherten Korrekturmuster zu erzeugen.

8. Bilderzeugungsvorrichtung (1), umfassend:
die Pixeltakt-Erzeugungseinheit (130), die in der Pixeltakt-Erzeugungsvorrichtung nach einem der Ansprüche 1 bis 7 enthalten ist;
eine Lichtquellensteuerungseinheit (121), die dafür konfiguriert ist, eine Lichtquelle so zu steuern, dass die Lichtquelle gemäß der durch die Pixeltakt-Erzeugungseinheit (130) erzeugten Pixeltaktfolge einen optischen Strahl auf ein lichtempfindliches Element emittiert;
eine Phasenabweichungsberechnungseinheit (125), die dafür konfiguriert ist, eine Phasenabweichung in einer Hauptabtastrichtung zu berechnen, und zwar auf der Grundlage eines Ermittlungsergebnisses einer Bildermittlungseinheit, die dafür konfiguriert ist, ein auf dem lichtempfindlichen Element gebildetes Wiedergabemuster zu ermitteln, oder einer Ermittlungseinheit für optische Strahlen, die dafür konfiguriert ist, einen in Richtung des lichtempfindlichen Elements emittierten optischen Strahl zu ermitteln; und
eine Korrekturmuster-Erzeugungseinheit (126C), die dafür konfiguriert ist, das Korrekturmuster auf der Grundlage eines Berechnungsergebnisses der Phasenabweichungsberechnungseinheit (125) zu erzeugen.

9. Bilderzeugungsvorrichtung (1), umfassend:
die Pixeltakt-Erzeugungseinheit (130), die in der Pixeltakt-Erzeugungsvorrichtung nach Anspruch 7 enthalten ist;
eine Lichtquellensteuerungseinheit (121), die dafür konfiguriert ist, eine Lichtquelle so zu steuern, dass die Lichtquelle gemäß der durch die Pixeltakt-Erzeugungseinheit (130) erzeugten Pixeltaktfolge einen optischen Strahl auf ein lichtempfindliches Element emittiert;
eine Phasenabweichungsberechnungseinheit (125), die dafür konfiguriert ist, eine Phasenabweichung in einer Hauptabtastrichtung zu berechnen, und zwar auf der Grundlage eines Ermittlungsergebnisses einer Bildermittlungseinheit, die dafür konfiguriert ist, ein auf dem lichtempfindlichen Element gebildetes Wiedergabemuster zu ermitteln, oder einer Ermittlungseinheit für optische Strahlen, die dafür konfiguriert ist, einen in Richtung des lichtempfindlichen Elements emittierten optischen Strahl zu ermitteln;
einen Transportkörper; und
eine Korrekturmuster-Erzeugungseinheit (126C), die das Korrekturmuster auf der Grundlage eines Berechnungsergebnisses der Phasenabweichungsberechnungseinheit (125) erzeugt,
worin
jedes Mal, wenn der Transportkörper sich eine vorbestimmte Anzahl von Malen gedreht hat, die Korrekturmuster-Erzeugungseinheit (126C) das Korrekturmuster erzeugt, und
die Pixeltakt-Erzeugungseinheit (130) die Pixeltaktfolge gemäß dem erzeugten Korrekturmuster erzeugt.

10. Bilderzeugungsvorrichtung (1), umfassend:
die Pixeltakt-Erzeugungseinheit (130), die in der Pixeltakt-Erzeugungsvorrichtung nach Anspruch 7 enthalten ist;
eine Lichtquellensteuerungseinheit (121), die dafür konfiguriert ist, eine Lichtquelle so zu steuern, dass die Lichtquelle gemäß der durch die Pixeltakt-Erzeugungseinheit (130) erzeugten Pixeltaktfolge einen optischen Strahl auf ein lichtempfindliches Element emittiert;
eine Phasenabweichungsberechnungseinheit (125), die dafür konfiguriert ist, eine Phasenabweichung in einer Hauptabtastrichtung zu berechnen, und zwar auf der Grundlage eines Ermittlungsergebnisses einer Bildermittlungseinheit, die dafür konfiguriert ist, ein auf dem lichtempfindlichen Element gebildetes Wiedergabemuster zu ermitteln, oder einer Ermittlungseinheit für optische Strahlen, die dafür konfiguriert ist, einen in Richtung des lichtempfindlichen Elements emittierten optischen Strahl zu ermitteln;
einen Toner; und
eine Korrekturmuster-Erzeugungseinheit (126C), die dafür konfiguriert ist, das Korrekturmuster auf der Grundlage eines Berechnungsergebnisses der Phasenabweichungsberechnungseinheit (125) zu erzeugen,
worin
die Korrekturmuster-Erzeugungseinheit (126C) dafür konfiguriert ist, das Korrekturmuster jedes Mal zu erzeugen, wenn eine Gebrauchsmenge des Toners, der zur Bilderzeugung verwendet wird, eine vorbestimmte Menge erreicht, und
die Pixeltakt-Erzeugungseinheit (130) dafür konfiguriert ist, die Pixeltaktfolge gemäß dem erzeugten Korrekturmuster zu erzeugen.

11. Bilderzeugungsvorrichtung (1), umfassend:
die Pixeltakt-Erzeugungseinheit (130), die in der Pixeltakt-Erzeugungsvorrichtung nach Anspruch 7 enthalten ist;
eine Einheit mit lichtempfindlichem Element, die ein lichtempfindliches Element einschließt;
eine Lichtquellensteuerungseinheit (121), die dafür konfiguriert ist, eine Lichtquelle so zu steuern, dass die Lichtquelle gemäß der durch die Pixeltakt-Erzeugungseinheit (130) erzeugten Pixeltaktfolge einen optischen Strahl auf ein lichtempfindliches Element emittiert;
eine Phasenabweichungsberechnungseinheit (125), die dafür konfiguriert ist, eine Phasenabweichung in einer Hauptabtastrichtung zu berechnen, und zwar auf der Grundlage eines Ermittlungsergebnisses einer Bildermittlungseinheit, die dafür konfiguriert ist, ein auf dem lichtempfindlichen Element gebildetes Wiedergabemuster zu ermitteln, oder einer Ermittlungseinheit für optische Strahlen, die dafür konfiguriert ist, einen in Richtung des lichtempfindlichen Elements emittierten optischen Strahl zu ermitteln;
ein Transportband; und
eine Korrekturmuster-Erzeugungseinheit (126C), die dafür konfiguriert ist, das Korrekturmuster auf der Grundlage eines Berechnungsergebnisses der Phasenabweichungsberechnungseinheit (125) zu erzeugen, worin
die Korrekturmuster-Erzeugungseinheit (126C) dafür konfiguriert ist, das Korrekturmuster jedes Mal zu erzeugen, wenn das Transportband oder die Einheit mit lichtempfindlichem Element, die das lichtempfindliche Element einschließt, ausgetauscht wird, und
worin die Pixeltakt-Erzeugungseinheit (130) dafür konfiguriert ist, die Pixeltaktfolge gemäß dem erzeugten Korrekturmuster zu erzeugen.

12. Bilderzeugungsvorrichtung (1), umfassend:
die Pixeltakt-Erzeugungseinheit (130), die in der Pixeltakt-Erzeugungsvorrichtung nach Anspruch 7 enthalten ist;
eine Lichtquellensteuerungseinheit (121), die dafür konfiguriert ist, eine Lichtquelle so zu steuern, dass die Lichtquelle gemäß der durch die Pixeltakt-Erzeugungseinheit (130) erzeugten Pixeltaktfolge einen optischen Strahl auf ein lichtempfindliches Element emittiert;
eine Phasenabweichungsberechnungseinheit (125), die dafür konfiguriert ist, eine Phasenabweichung in einer Hauptabtastrichtung zu berechnen, und zwar auf der Grundlage eines Ermittlungsergebnisses einer Bildermittlungseinheit, die dafür konfiguriert ist, ein auf dem lichtempfindlichen Element gebildetes Wiedergabemuster zu ermitteln, oder einer Ermittlungseinheit für optische Strahlen, die dafür konfiguriert ist, einen in Richtung des lichtempfindlichen Elements emittierten optischen Strahl zu ermitteln;
eine Korrekturmuster-Erzeugungseinheit (126C), die dafür konfiguriert ist, das Korrekturmuster auf der Grundlage eines Berechnungsergebnisses der Phasenabweichungsberechnungseinheit (125) zu erzeugen; und
einen Temperatursensor, der dafür konfiguriert ist, eine Temperatur innerhalb der Bilderzeugungsvorrichtung (1) zu ermitteln, worin
die Korrekturmuster-Erzeugungseinheit (126C) dafür konfiguriert ist, das Korrekturmuster zu erzeugen, wenn eine Differenz zwischen der durch den Temperatursensor ermittelten Temperatur und einer in der vorbestimmten Speichereinheit (140) gespeicherten Referenztemperatur einen vorbestimmten Wert überschreitet, und
die Pixeltakt-Erzeugungseinheit (130) dafür konfiguriert ist, die Pixeltaktfolge gemäß dem erzeugten Korrekturmuster zu erzeugen.

## Revendications

1. Dispositif de génération d'horloge pixel comprenant :
une unité de génération d'horloge pixel (130) configurée afin de générer un train d'horloge pixel dans lequel une horloge de correction présentant une durée différente de celle d'une horloge basique est insérée par intermittence dans un train d'horloge basique correspondant à une ligne dans la principale direction de balayage,
dans lequel chaque train d'horloge pixel est généré sur la base d'une pluralité de blocs incluant une pluralité d'horloges basiques et une pluralité de blocs de correction, dans lequel le nombre d'horloges dans chaque bloc est le même, et
dans lequel le train d'horloge pixel inclut une pluralité de blocs qui sont différents dans un motif de correction comme un motif dans lequel l'horloge de correction est insérée,
**caractérisé par** chaque bloc numéroté de manière impaire dans la principale direction de balayage présentant un premier motif de correction qui est différent d'un second motif de correction de chaque bloc numéroté de manière paire dans la principale direction de balayage.

2. Dispositif de génération d'horloge pixel selon la revendication 1,
dans lequel chaque bloc dans le premier motif de correction ou le second motif de correction inclut alternativement des horloges de correction insérées à un long intervalle qui est plus long d'une différence prédéterminée qu'un intervalle prédéterminé et une horloge de correction insérée à un intervalle court qui est plus court de la différence prédéterminée que l'intervalle prédéterminé.

3. Dispositif de génération d'horloge pixel selon la revendication 1 ou 2,
dans lequel chaque bloc dans le premier motif de correction ou le second motif de correction inclut une pluralité de petits blocs qui diffèrent dans un intervalle auquel l'horloge de correction est insérée de manière répétitive.

4. Dispositif de génération d'horloge pixel selon l'une quelconque des revendications 1 à 3,
dans lequel une pluralité de trains d'horloge de pixel, correspondant à une pluralité de lignes adjacentes les unes aux autres dans une direction de sous-balayage, incluent un groupe de bloc,
chaque groupe de bloc incluant la pluralité de blocs qui diffèrent dans le motif de correction correspondant à des zones adjacentes les unes aux autres dans la direction de sous-balayage.

5. Dispositif de génération d'horloge pixel selon la revendication 4, lorsqu'elle dépend de la revendication 1 ou de la revendication 2,
dans lequel le groupe de bloc inclut
un bloc incluant une horloge de correction insérée de manière répétitive à un long intervalle qui est plus long d'une différence prédéterminée qu'un intervalle prédéterminé, et
un bloc incluant une horloge de correction insérée de matière répétitive à un intervalle court qui est plus court d'une différence prédéterminée qu'un intervalle prédéterminé.

6. Dispositif de génération d'horloge pixel selon la revendication 5,
dans lequel le groupe de bloc inclut
un bloc incluant une horloge de correction insérée de manière répétitive à l'intervalle prédéterminée, et
un bloc incluant une horloge de correction insérée de manière répétitive à l'intervalle long et une horloge de correction insérée de manière répétitive à l'intervalle court.

7. Dispositif de génération d'horloge pixel selon l'une quelconque des revendications 1 à 6, comprenant en outre
une unité de traitement de stockage de modèle de correction (127, 140) configurée afin de stocker le motif de correction dans une unité de stockage prédéterminée (140),
dans lequel l'unité de génération d'horloge pixel (130) est configurée afin de générer le train d'horloge pixel selon le motif de correction stocké.

8. Appareil de formation d'image (1) comprenant :
l'unité de génération d'horloge pixel (130) incluse dans le dispositif de génération d'horloge pixel selon l'une quelconque des revendications 1 à 7 ;
une unité de commande de source lumineuse (121) configurée afin de commander une source lumineuse de sorte que la source lumineuse émette un faisceau optique sur un élément photosensible selon le train d'horloge pixel généré par l'unité de génération d'horloge pixel (130) ;
une unité de calcul d'écart de phase (125) configurée afin de calculer un écart de phase dans une direction de balayage principal sur la base d'un résultat de détection d'une unité de détection d'image configurée afin de détecter un motif de rendu formé sur l'élément photosensible ou d'une unité de détection de faisceau optique configurée afin de détecter un faisceau optique émis vers l'élément photosensible ;
et
une unité de génération de motif de correction (126C) configurée afin de générer le motif de correction sur la base d'un résultat de calcul par l'unité de calcul d'écart de phase (125).

9. Appareil de formation d'image (1), comprenant :
l'unité de génération d'horloge pixel (130) incluse dans le dispositif de génération d'horloge pixel selon la revendication 7,
une unité de commande de source lumineuse (121) configurée afin de commander une source lumineuse de sorte que la source lumineuse émette un faisceau optique vers un élément photosensible selon le train d'horloge pixel généré par l'unité de génération d'horloge pixel (130) ;
une unité de calcul d'écart de phase (125) configurée afin de calculer un écart de phase dans une direction de balayage principale sur la base d'un résultat de détection d'une unité de détection d'image configurée afin de détecter un motif de rendu formé sur l'élément photosensible ou d'une unité de détection de faisceau optique configurée afin de détecter un faisceau optique émis vers l'élément photosensible ;
un corps de convoyage ; et
une unité de génération de motif de correction (126C) qui génère le motif de correction sur la base d'un résultat de calcul par l'unité de calcul d'écart de phase (125),
dans lequel
à chaque fois que le corps de convoyage a tourné un nombre prédéterminé de fois, l'unité de génération de motif de correction (126C) génère le motif de correction, et
l'unité de génération d'horloge pixel (130) génère le train d'horloge pixel selon le motif de correction généré.

10. Appareil de formation d'image (1), comprenant :
l'unité de génération d'horloge pixel (130) incluse dans le dispositif de génération d'horloge pixel selon la revendication 7 ;
une unité de commande de source lumineuse (121) configurée afin de commander une source lumineuse de sorte que la source lumineuse émette un faisceau optique vers un élément photosensible selon le train d'horloge pixel généré par l'unité de génération d'horloge pixel (130) ;
une unité de calcul d'écart de phase (125) configurée afin de calculer un écart de phase dans une direction de balayage principale sur la base d'un résultat de détection d'une unité de détection d'image configurée afin de détecter un motif de rendu formé sur l'élément photosensible ou d'une unité de détection de faisceau optique configurée afin de détecter un faisceau optique émis vers l'élément photosensible ;
un toner ; et
une unité de génération de motif de correction (126C) configurée afin de générer le motif de correction sur la base d'un résultat de calcul de l'unité de calcul d'écart de phase (125),
dans lequel
à chaque fois qu'une quantité d'utilisation du toner qui est utilisé pour la formation d'image atteint une quantité prédéterminée, l'unité de génération de motif de correction (126C) est configurée afin de générer le motif de correction, et l'unité de génération d'horloge pixel (130) est configurée afin de générer le train d'horloge pixel selon le motif de correction généré.

11. Appareil de formation d'image (1), comprenant :
l'unité de génération d'horloge pixel (130) incluse dans le dispositif de génération d'horloge pixel selon la revendication 7 ;
une unité d'élément photosensible incluant un élément photosensible :
une unité de commande de source lumineuse (121) configurée afin de commander une source lumineuse de sorte que la source lumineuse émette un faisceau optique vers l'élément photosensible selon le train d'horloge pixel généré par l'unité de génération d'horloge pixel (130) ;
une unité de calcul d'écart de phase (125) configurée afin de calculer un écart de phase dans une direction de balayage principale sur la base d'un résultat de détection d'une unité de détection d'image configurée afin de détecter un motif de rendu formé sur l'élément photosensible ou d'une unité de détection de faisceau optique configurée afin de détecter un faisceau optique émis vers l'élément photosensible ;
une courroie de convoyage ; et
une unité de génération de motif de correction (126C) configurée afin de générer le motif de correction sur la base d'un résultat de calcul de l'unité de calcul d'écart de phase (125),
dans lequel
à chaque fois que la courroie de convoyage ou l'unité d'élément photosensible incluant l'élément photosensible est remplacée, l'unité de génération de motif de correction (126C) est configurée afin de générer le motif de correction, et
dans lequel l'unité de génération d'horloge pixel (130) est configurée afin de générer le train d'horloge pixel selon le motif de correction généré.

12. Appareil de formation d'image (1), comprenant :
l'unité de génération d'horloge pixel (130) incluse dans le dispositif de génération d'horloge pixel selon la revendication 7 ;
une unité de commande de source lumineuse (121) configurée afin de commander une source lumineuse de sorte que la source lumineuse émette un faisceau optique vers un élément photosensible selon le train d'horloge pixel généré par l'unité de génération d'horloge pixel (130) ;
une unité de calcul d'écart de phase (125) configurée afin de calculer un écart de phase dans une direction de balayage principale sur la base d'un résultat de détection d'une unité de détection d'image configurée afin de détecter un motif de rendu formé sur l'élément photosensible ou d'une unité de détection de faisceau optique configurée afin de détecter un faisceau optique émis vers l'élément photosensible ;
une unité de génération de motif de correction (126C) configurée afin de générer le motif de correction sur la base d'un résultat de calcul de l'unité de calcul d'écart de phase (125) ; et
un capteur de température configuré afin de détecter une température à l'intérieur de l'appareil de formation d'image (1),
dans lequel
lorsqu'une différence entre la température détectée par le capteur de température et une température de référence stockée dans l'unité de stockage prédéterminée (140) dépasse une valeur prédéterminée, l'unité de génération de motif de correction (126C) est configurée afin de générer le motif de correction, et
l'unité de génération d'horloge pixel (130) est configurée afin de générer le train d'horloge pixel selon le motif de correction générée.
